# EUROPEAN PATENT APPLICATION

(11) **EP 4 043 614 A1**
(43) Date of publication of application: **17.08.2022**
(21) Application number: 20889790.0
(22) Date of filing: 27.08.2020
(51) Int. Cl.: C23C 28/00, C25D 5/02, C23C 18/16

(54) **METHOD FOR MANUFACTURING ELECTRODE LEAD, AND POUCH-TYPE SECONDARY BATTERY**

(30) Priority: 20.11.2019 KR 20190149920
(71) Applicant: LG Energy Solution, Ltd., Seoul 07335 (KR)
(72) Inventor: KANG, Min Hyeong, Daejeon 34122 (KR); CHOI, Yong Su, Daejeon 34122 (KR); KIM, Sang Hun, Daejeon 34122 (KR)
(74) Representative: Plasseraud IP
(86) International application number: PCT/KR2020/011473
(87) International publication number: WO 2021/101028

(57) **Abstract**

A method for manufacturing an electrode lead according to an embodiment of the present invention for achieving the above objects includes: a step of manufacturing each of a first electrode lead and a second electrode lead; and a step of bonding the first electrode lead to the second electrode lead form a connection part, wherein the step of manufacturing the first electrode lead includes: a step of unwinding a first metal plate from a first metal reel; a step of attaching a first tape to perform masking on a first connection area, on which the connection part is to be formed, in the first metal plate; a step of performing plating and surface treatment on the first metal plate; and a step of removing the first tape, wherein the step of manufacturing the second electrode lead includes: a step of unwinding a second metal plate from a second metal reel; a step of attaching a second tape to perform masking on a second connection area, on which the connection part is to be formed, in the second metal plate; a step of performing plating and surface treatment on the second metal plate; and a step of removing the second tape.

## Description

### CROSS-REFERENCE TO RELATED APPLICATION

The present application claims the benefit of the priority of Korean Patent Application No. 10-2019-0149920, filed on November 20, 2019, which is hereby incorporated by reference in its entirety.

### TECHNICAL FIELD

The present invention relates to a method for manufacturing an electrode lead and a pouch type secondary battery, and more particularly, to a method for manufacturing an electrode lead, which is formed in two stages to discharge a gas generated in a battery case to the outside, thereby securing safety, and in which resistance between the two-stage electrode leads is reduced to decrease in amount of heat to be generated, and a pouch type secondary battery including the same.

### BACKGROUND ART

In general, secondary batteries include nickelcadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In order to manufacture an electrode assembly, a cathode (hereinafter, referred to as a positive electrode), a separator, and an anode (hereinafter, referred to as a negative electrode) are manufactured and stacked. Specifically, positive electrode active material slurry is applied to a positive electrode collector, and negative electrode active material slurry is applied to a negative electrode collector to manufacture a positive electrode and a negative electrode. Also, when the separator is interposed and stacked between the manufactured positive electrode and the manufactured negative electrode, unit cells are formed. The unit cells are stacked on each other to form an electrode assembly. Also, when the electrode assembly is accommodated in a specific case, and an electrolyte is injected, the secondary battery is manufactured.

Such a secondary battery is classified into a pouch type secondary battery and a can type secondary battery according to a material of a battery case accommodating an electrode assembly. In the pouch type secondary battery, the electrode assembly is accommodated in a pouch made of a flexible polymer material having a variable shape. Also, in the can type secondary battery, an electrode assembly is accommodated in a case made of a metal or plastic material having a predetermined shape.

The pouch type battery case is manufactured by performing drawing molding on a pouch film having flexibility to form a cup part. In addition, when the cup part is formed, an electrode assembly is accommodated in an accommodation space of the cup part, and then, the battery case is folded to seal a sealing part, thereby manufacturing a secondary battery.

In the secondary battery, a gas in the secondary battery may be generated by internal short-circuit, overcharging, overdischarging, or the like. Here, the gas may allow the secondary battery to increase in internal pressure to cause problems such as weakening of bonding force between components, damage of a case of the secondary battery, an early operation of a protection circuit, deformation of an electrode, internal short-circuit, explosion, and the like. Thus, in the case of the can type secondary battery, a protection member such as a CID filter and a safety vent is provided to physically interrupt an electrical connection when an internal pressure of a case increases. However, in the case of the pouch type secondary battery according to the related art, the protection member is not sufficiently provided.

### DISCLOSURE OF THE INVENTION

### TECHNICAL PROBLEM

An object of the present invention for solving the above problems is to provide a method for manufacturing an electrode lead, which is formed in two stages to discharge a gas generated in a battery case to the outside, thereby securing safety, and in which resistance between the two-stage electrode leads is reduced to decrease in amount of heat to be generated, and a pouch type secondary battery including the same.

The objects of the present invention are not limited to the aforementioned object, but other objects not described herein will be clearly understood by those skilled in the art from descriptions below.

### TECHNICAL SOLUTION

A method for manufacturing an electrode lead according to an embodiment of the present invention for achieving the above objects includes: a step of manufacturing each of a first electrode lead and a second electrode lead; and a step of bonding the first electrode lead to the second electrode lead form a connection part, wherein the step of manufacturing the first electrode lead includes: a step of unwinding a first metal plate from a first metal reel; a step of attaching a first tape to perform masking on a first connection area, on which the connection part is to be formed, in the first metal plate; a step of performing plating and surface treatment on the first metal plate; and a step of removing the first tape, wherein the step of manufacturing the second electrode lead includes: a step of unwinding a second metal plate from a second metal reel; a step of attaching a second tape to perform masking on a second connection area, on which the connection part is to be formed, in the second metal plate; a step of performing plating and surface treatment on the second metal plate; and a step of removing the second tape.

Also, the first electrode lead may have one end connected to an electrode tab, and the first connection area may be formed on the other end of the first electrode lead.

Also, the second connection area may be formed on one end of the second electrode lead.

Also, the step of manufacturing the first electrode lead may further include a step of cutting the first metal plate at regular intervals after the step of removing the first tape, and the step of manufacturing the second electrode lead may further include a step of cutting the second metal plate at regular intervals after the step of removing the second tape.

Also, the step of manufacturing the first electrode lead may further include a step of cutting the first metal plate at regular intervals before the step of attaching the first tape to perform the masking, and the step of manufacturing the second electrode lead may further include a step of cutting the second metal plate at regular intervals before the step of attaching the second tape to perform the masking.

Also, when the step of performing the plating and the surface treatment is performed, a first film may be formed on an outer surface of the first metal plate, and a second film may be formed on an outer surface of the second metal plate.

Also, in the step of performing the plating and the surface treatment is performed, the surface treatment may include at least one of chromate treatment, zirconia treatment, or titanium treatment.

A pouch type secondary battery according to an embodiment of the present invention for achieving the above objects includes: an electrode assembly in which electrodes, which includes a positive electrode and a negative electrode, and a separator are stacked; a battery case having a pouch shape, which is configured to accommodate the electrode assembly; an electrode tab connected to the electrodes to protrude from one side of the electrode assembly; a first electrode lead having one end connected to the electrode tab; a second electrode lead having one end connected to the other end of the first electrode lead and the other end protruding to the outside of the battery case; and a connection part configured to bond the first electrode lead and the second electrode lead to each other, wherein, in the first electrode lead, a first film is formed on an outer surface of the first electrode lead, and the first film is not formed on a first connection area on which the connection part is formed, and in the second electrode lead, a second film is formed on an outer surface of the second electrode lead, and the second film is not formed on a second connection area, on which the connection part is formed.

Also, the first film or the second film may include at least one of a chromate film, a zirconia film, or a titanium film.

Also, the pouch type secondary battery may further include an insulation part surrounding a portion of each of the first and second electrode leads to allow the first and second electrode leads to be bonded to the battery case.

Also, bonding force between each of the first and second electrode leads and the connection part may be less than that between each of the first and second electrode leads and the insulation part.

Also, the insulation part may surround a portion at which the first and second electrode leads are connected to each other through the connection part.

Also, the insulation part may be made of at least one of thermoplastic, thermosetting and photocurable resins having electrical insulation properties.

Also, the connection part may include a conductive material and a conductive polymer.

Also, the connection part may have a thickness of 1 µm to 500 µm.

Particularities of other embodiments are included in the detailed description and drawings.

### ADVANTAGEOUS EFFECTS

According to the embodiments of the present invention, there are at least the following effects.

The electrode lead may be provided in plurality to form two-stage electrode leads. Thus, even if the gas is generated in the battery case to increase in internal pressure, the gas may be discharged to the outside to secure the safety.

In addition, even if the plating and the surface treatment are performed on the first electrode lead and the second electrode lead, the film may not be formed on the first and second connection areas that are connected to each other through the connection part to reduce the resistance.

The effects of the prevent invention are not limited by the aforementioned description, and thus, more varied effects are involved in this specification.

### BRIEF DESCRIPTION OF THE DRAWINGS

FIG. 1 is an assembly view of a secondary battery according to an embodiment of the present invention.
FIG. 2 is a perspective view of the secondary battery according to an embodiment of the present invention.
FIG. 3 is a perspective view illustrating a state in which the pouch type secondary battery is expanded in volume according to an embodiment of the present invention.
FIG. 4 is a partial cross-sectional view taken along line A-A' of FIG. 2 in the pouch type secondary battery according to an embodiment of the present invention.
FIG. 5 is a partial cross-sectional view taken along line A-A' of FIG. 2 in the state in which the pouch type secondary battery is expanded in volume according to an embodiment of the present invention.
FIG. 6 is a flowchart illustrating a method for manufacturing a first electrode lead and a second electrode lead according to an embodiment of the present invention.
FIG. 7 is a schematic view illustrating a state in which a tape is attached to a metal plate wound from a metal reel according to an embodiment of the present invention.
FIG. 8 is a schematic view illustrating a state in which the tape is delaminated from the metal plate wound from the metal reel according to an embodiment of the present invention.
FIG. 9 is a schematic view illustrating a state in which the first electrode lead and the second electrode lead are bonded to each other according to an embodiment of the present invention.
FIG. 10 is a schematic view illustrating a state in which the first electrode lead and the second electrode lead are bonded to each other to completely manufacture two-stage electrode leads according to an embodiment of the present invention.
FIG. 11 is a flowchart illustrating a method for manufacturing a first electrode lead and a second electrode lead according to another embodiment of the present invention.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless terms used in the present invention are defined differently, all terms (including technical and scientific terms) used herein have the same meaning as generally understood by those skilled in the art. Also, unless defined clearly and apparently in the description, the terms as defined in a commonly used dictionary are not ideally or excessively construed as having formal meaning.

In the following description, the technical terms are used only for explaining a specific exemplary embodiment while not limiting the present invention. In this specification, the terms of a singular form may include plural forms unless specifically mentioned. The meaning of "comprises" and/or "including" does not exclude other components besides a mentioned component.

Hereinafter, preferred embodiments will be described in detail with reference to the accompanying drawings.

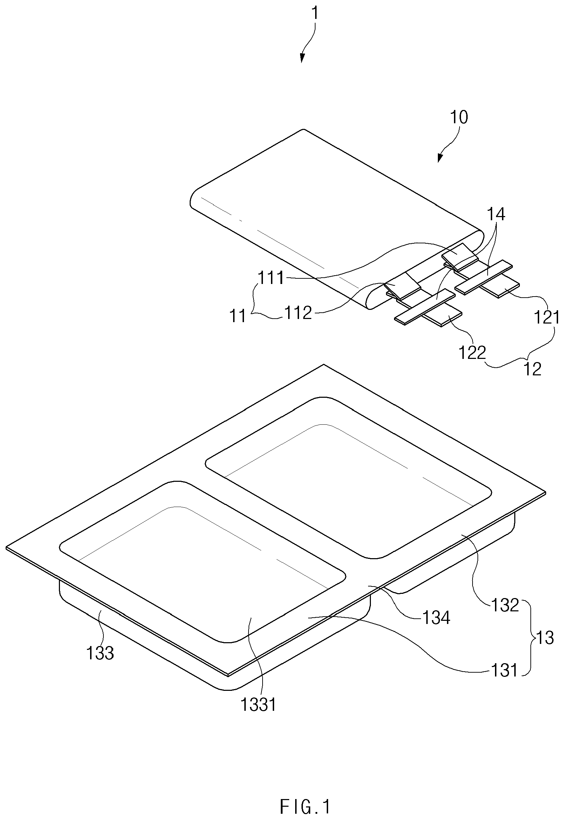

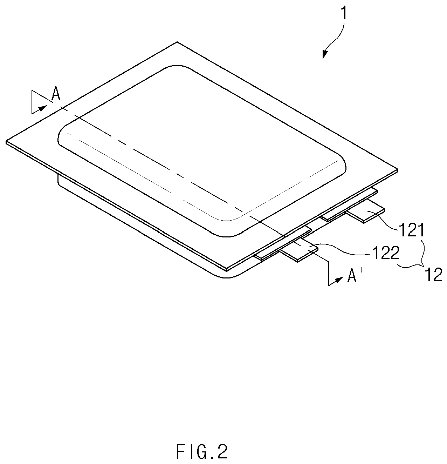

FIG. 1 is an assembly view of a secondary battery 1 according to an embodiment of the present invention, and FIG. 2 is a perspective view of the secondary battery 1 according to an embodiment of the present invention.

As illustrated in FIG. 1, the pouch type secondary battery 1 according to an embodiment of the present invention includes an electrode assembly 10, in which electrodes such as a positive electrode and a negative electrode and separators are stacked, and a pouch type battery case 13 accommodating the electrode assembly 10 therein.

To manufacture the pouch type secondary battery 1, first, slurry in which an electrode active material, a binder, and a plasticizer are mixed with each other is applied to a positive electrode collector and a negative electrode collector to manufacture electrodes such as a positive electrode and a negative electrode. The electrodes are stacked on both sides of a separator to manufacture the electrode assembly 10 having a predetermined shape. Then, the electrode assembly 10 is inserted into the battery case 13, and the battery case 13 is sealed after injecting an electrolyte therein.

Particularly, the electrode assembly 10 may be a stacked structure including two types of electrodes such as a positive electrode and a negative electrode and a separator disposed between the electrodes to insulate the electrodes from each other or disposed at a left or right side of one electrode. The stacked structure may have various shapes without being limited in shape. For example, the cathode and the anode, each of which has a predetermined standard, may be stacked with the separator therebetween, or the stacked structure may be wound in the form of a jelly roll. Each of the two types of electrodes, i.e., the positive electrode and the negative electrode has a structure in which active material slurry is applied to the electrode collector having a metal foil or metal mesh shape. The slurry may be usually formed by agitating a granular active material, an auxiliary conductor, a binder, and a plasticizer with a solvent added. The solvent may be removed in the subsequent process.

As illustrated in FIG. 1, the electrode assembly 10 includes the electrode tabs 11. The electrode tabs 11 are respectively connected to a positive electrode and a negative electrode of the electrode assembly 10 to protrude to the outside of the electrode assembly 10, thereby providing a path, through which electrons are moved, between the inside and outside of the electrode assembly 10. An electrode collector of the electrode assembly 10 is constituted by a portion coated with an electrode active material and a distal end, on which the electrode active material is not applied, i.e., a non-coating portion. Also, each of the electrode tabs 11 may be formed by cutting the non-coating portion or by connecting a separate conductive member to the non-coating portion through ultrasonic welding. As illustrated in FIG. 1, the electrode tabs 11 may protrude from one side of the electrode assembly 10 in the same direction, but the present invention is not limited thereto. For example, the electrode tabs 11 may protrude in directions different from each other.

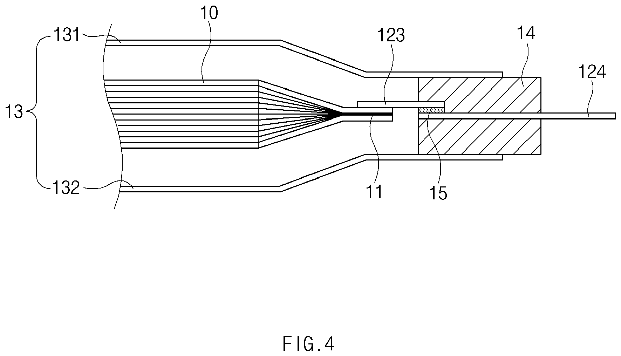

In the electrode assembly 10, the electrode lead 12 that supplies electricity to the outside of the secondary battery 1 is connected to the electrode tab 11 through spot welding. The electrode lead 12 according to an embodiment of the present invention is provided in plurality to form two-stage electrode leads 12. Also, in the two-stage electrode leads 12, a first electrode lead 123 (see FIG. 4) is connected to the electrode tab 11 of the electrode assembly 10, and a second electrode lead 124 (see FIG. 4) protrudes to the outside of a battery case 13. A detailed description of the two-stage electrode leads 12 will be described later.

A portion of the electrode lead 12 is surrounded by an insulation part 14. The insulation part 14 may be disposed to be limited within a sealing part 134, at which an upper case 131 and a lower case 132 of the battery case 13 are thermally fused, so that the electrode lead 12 is bonded to the battery case 13. Also, electricity generated from the electrode assembly 10 may be prevented from flowing to the battery case 13 through the electrode lead 12, and the sealing of the battery case 13 may be maintained. Thus, the insulation part 14 may be made of a nonconductor having non-conductivity, which is not electrically conductive. In general, although an insulation tape which is easily attached to the electrode lead 12 and has a relatively thin thickness is mainly used as the insulation part 14, the present invention is not limited thereto. For example, various members may be used as the insulation part 14 as long as the members are capable of insulating the electrode lead 12.

The electrode lead 12 includes a positive electrode lead 121 having one end connected to a positive electrode tab 111 to extend in a direction in which the positive electrode tab 111 protrudes and a negative electrode lead 122 having one end connected to a negative electrode tab 112 to extend in a direction in which the negative electrode tab 112 protrudes. On the other hand, as illustrated in FIG 1, all of the other ends of the positive electrode lead 121 and the negative electrode lead 122 protrude to the outside of the battery case 13. As a result, electricity generated in the electrode assembly 10 may be supplied to the outside. Also, since each of the positive electrode tab 111 and the negative electrode tab 112 is formed to protrude in various directions, each of the positive electrode lead 121 and the negative electrode lead 122 may extend in various directions.

The positive electrode lead 121 and the negative electrode lead 122 may be made of materials different from each other. That is, the cathode lead 121 may be made of the same material as the cathode collector, i.e., an aluminum (Al) material, and the anode lead 122 may be made of the same material as the anode collector, i.e., a copper (Cu) material or a copper material coated with nickel (Ni). Also, a portion of the electrode lead 12, which protrudes to the outside of the battery case 13, may be provided as a terminal part and electrically connected to an external terminal.

The battery case 13 is a pouch made of a flexible material, which accommodates the electrode assembly 10 therein. Hereinafter, the case in which the battery case 13 is the pouch will be described. When a pouch film 135 having flexibility is drawn by using a punch or the like, a portion of the pouch film 135 is stretched to form a cup part 133 including a pocket-shaped accommodation space 1331, thereby manufacturing the battery case 13. The battery case 13 accommodates the electrode assembly 10 so that a portion of the electrode lead 12, i.e., the terminal part is exposed and then is sealed. As illustrated in FIG. 1, the battery case 13 includes the upper case 131 and the lower case 132. An accommodation space 1331 in which a cup part 133 is formed to accommodate the electrode assembly 10 may be provided in the lower case 132, and upper case 131 may cover an upper side of the accommodation space 1331 so that the electrode assembly 10 is not separated to the outside of the battery case 13. Also, the sealing part 134 is sealed to seal the accommodation space 1331. Here, the cup part 133 having the accommodation part 1331 may be formed in the upper case 131 to accommodate the electrode assembly 10 in the upper portion. As illustrated in FIG. 1, one side of the upper case 131 and one side of the lower case 132 may be connected to each other. However, the present invention is not limited thereto. For example, the upper case 131 and the lower case 132 may be separately manufactured to be separated from each other.

When an electrode lead 12 is connected to the electrode tab 11 of the electrode assembly 10, and the insulation part 14 is provided on a portion of the electrode lead 12, the electrode assembly 10 may be accommodated in the accommodation space 1331 provided in the cup part 133 of the lower case 132, and the upper case 131 may cover the accommodation space from the upper side. Also, the electrolyte is injected, and the sealing part 134 extending outward from edges of the upper case 131 and the lower case 132 is sealed. The electrolyte may move lithium ions generated by electrochemical reaction of the electrode during charging and discharging of the secondary battery 1. The electrolyte may include a non-aqueous organic electrolyte that is a mixture of a lithium salt and a high-purity organic solvent or a polymer using a polymer electrolyte. As illustrated in FIG. 2, the pouch type secondary battery 1 may be manufactured through the above-described method.

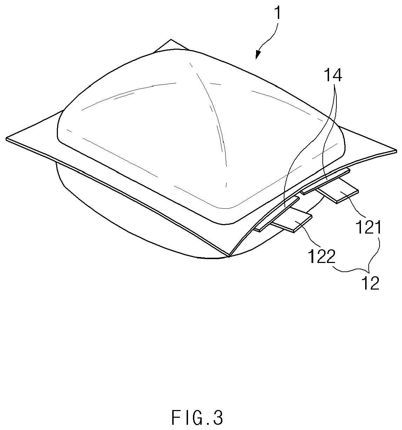

FIG. 3 is a perspective view illustrating a state in which the pouch type secondary battery 1 is expanded in volume according to an embodiment of the present invention.

In general, the pouch type secondary battery 1 may abnormally generate a large amount of gases due to heat generation due to an internal short circuit, overcharge, overdischarge, etc., by an external impact of the electrode assembly 10, and also due to electrolyte decomposition and a thermal runaway phenomenon by the heat generation. In addition, when the secondary battery is stored at a high temperature, an electrochemical reaction between an electrolyte and an electrode active material is quickly promoted by the high temperature to generate a gas.

In order to manufacture the pouch type battery case 13, the pouch film 135 having the flexibility is drawn using a punch or the like, and the cup part 133 is recessed in the lower case 132. The drawing is performed by inserting the pouch film 135 into a press and applying a pressure to the pouch film 135 through the punch to stretch the pouch film 135. As described above, the pouch film 135 is stretched to form the cup part 133, thereby manufacturing the battery case 13. The pouch film 135 is formed by stacking a surface protection layer made of a nylon resin or polyethylene terephthalate (PET), a gas barrier layer mainly made of an aluminum thin film (Al foil), and a sealant layer mainly made of a polymer such as polypropylene (PP) or polyethylene (PE).

However, if the gas is generated in the battery case 13, since all the layers have the flexibility in the battery case 13, the internal pressure of the secondary battery 1 increases by the generated gas to expand a volume of the secondary battery 1 as illustrated in FIG. 3. In addition, there are problems such as weakening of bonding force between components, damage of the case of the secondary battery 1, an early operation of a protection circuit, deformation of an electrode, internal short circuit, explosion, and the like.

FIG. 4 is a partial cross-sectional view taken along line A-A' of FIG. 2 in the pouch type secondary battery 1 according to an embodiment of the present invention.

When the gas is generated in the battery case 13, the internal pressure of the secondary battery 1 may increase to cause the weakening of the bonding force between components, the damage of the case of the secondary battery 1, the early operation of the protection circuit, the deformation of the electrode, the internal short circuit, the explosion, and the like.

In order to solve the above problems, in the pouch type secondary battery 1 according to an embodiment of the present invention, as illustrated in FIG. 4, the electrode lead 12 is provided in two stages. That is, the electrode lead 12 includes a first electrode lead 123 connected to the electrode tab 11 of the electrode assembly 10 and a second electrode 124 protruding to the outside of the battery case 13. Also, one surface of the other end of the first electrode lead 1230 and one surface of one end of the second electrode lead 1240 may be bonded to each other through a connection part 15 and thus be connected to each other.

When the battery case 13 is normal, the first and second electrode leads 123 and 124 have to be stably connected to each other. When the secondary battery 13 is expanded, the first and second electrode leads 123 and 124 have to be easily detached from each other. Thus it is preferable that the first and second electrode leads 123 and 124 are disposed on different planes so that upper and lower surfaces thereof are connected to each other instead that the first and second electrode leads 123 and 124 are disposed on the same plane so that side surfaces thereof are connected to each other.

It is preferable that the connection part 15 for bonding the first electrode lead 123 and the second electrode lead 124 to each other has a very thin thickness of 1 µm to 500 µm. Therefore, even if the first electrode lead 123 and the second electrode lead 124 form a stepped portion therebetween, a size of the stepped portion may not be excessively large.

As described above, a portion of the electrode lead 12 is surrounded by the insulation part 14. Also, the electrode lead is bonded to the battery case through the insulation part 14. In a process of sealing the upper case 131 and the lower case 132, a relatively high pressure may be applied to a portion contacting the electrode lead 12 to damage the sealant layer of the battery case 13. Since the sealant layer directly contacts the electrode assembly 10 as described above, the sealant layer may have insulation properties. However, if the sealant layer is damaged, electricity may flow to the battery case 13 through the electrode lead 12. Particularly, since the gas barrier layer of the battery case 13 is made of a metal such as aluminum, if the sealant layer is partially damaged to expose the gas barrier layer, the electricity may easily flow due to the contact with the electrode lead 12.

Thus, the insulation part 14 may be made of a nonconductor having non-conductivity, which is not electrically conductive. Also, the insulation part 14 has high mechanical strength and heat resistance. Thus, the insulation part 14 may include, for example, a polyolefin-based resin such as polypropylene (PP) or polyethylene (PE). Particularly, polypropylene (PP) is excellent in mechanical properties such as tensile strength, rigidity, surface hardness, abrasion resistance, heat resistance, and the like, and chemical properties such as corrosion resistance and the like and thus is mainly used for manufacturing the insulation part 14. Furthermore, acid-treated polypropylene may be provided to improve bonding force of the insulation part 14. For example, the acid-treated polypropylene and normal polypropylene may be mixed with each other, polypropylene may be further mixed, or only the acid-treated polypropylene may be provided simply. Here, the acid-treated polypropylene may be maleic anhydride polypropylene (MAH PP).

Thus, when the upper case 131 and the lower case 132 are thermally fused, the insulation part 14 may be maintained in shape to prevent the electrode lead 12 and the gas barrier layer from contacting each other even through a portion of the sealant layer is damaged. Thus, the electricity generated from the electrode assembly 10 may be prevented from flowing to the battery case 13 through the electrode lead 12. Also, the insulation part 14 has high bonding force. Thus, the insulation part 14 may be disposed to be limited within a sealing part, at which the upper case 131 and the lower case 132 are thermally fused, so that the electrode lead 12 is bonded to the battery case 13. In general, the insulation part 14 may be made of at least one of thermoplastic, thermosetting and photocurable resins having electrical insulation properties as a polymer resin. In general, although an insulation tape which is easily attached to the electrode lead 12 and has a relatively thin thickness is mainly used as the insulation part 14, the present invention is not limited thereto. For example, various members may be used as the insulation part 14 as long as the members are capable of insulating the electrode lead 12.

As illustrated in FIG. 4, the insulation part 14 may surround all of the first electrode lead 123, the connection part 15, and the second electrode lead 124. If the first electrode lead 123 or the connection part 15 is not surrounded by the insulation part 14, repulsive force may not be applied to the first electrode lead 123 and the second electrode 124 even though the battery case 13 is expanded. The repulsive force will be described below in detail.

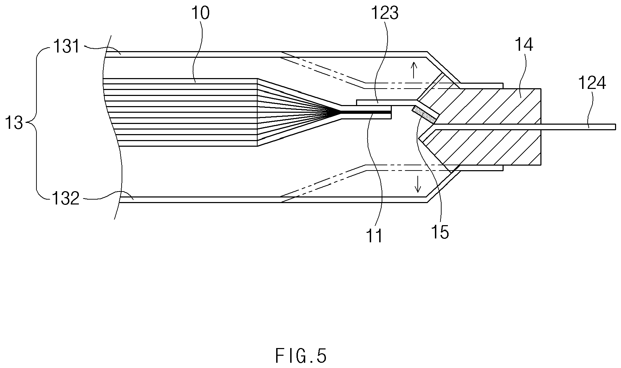

FIG. 5 is a partial cross-sectional view taken along line A-A' of FIG. 2 in the state in which the pouch type secondary battery is expanded in volume according to an embodiment of the present invention.

As described above, when the internal pressure of the pouch type secondary battery 13 increases, the pouch type secondary battery 1 is expanded in volume. Thus, as illustrated in FIG. 5, an outer wall of the battery case 13 moves outward. Here, upper and lower walls of the outer wall of the battery case 13 may have a large area and be not sealed, resulting in higher flexibility. Thus, the upper wall of the battery case 13 may move upward, and the lower wall of the battery case 13 may move downward. The outer wall of the battery case 13 may move outward to apply the repulsive force to the first electrode lead 123 and the second electrode 124 connected through the insulation part 14. Thus, as the internal pressure of the battery case 13 gradually increases, moving force of the outer wall of the battery case 13 may more increase, and the repulsive force applied to the first electrode lead 123 and the second electrode lead 124 more increase.

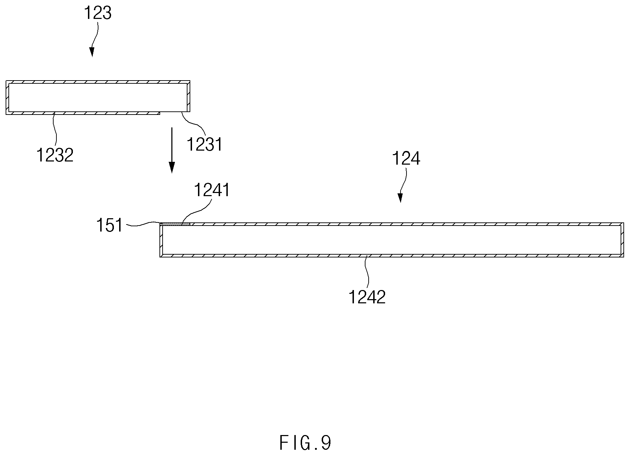

When the bonding force between the first electrode lead 123 and the second electrode lead 124 is greater than the repulsive force, as illustrated in FIG. 9, the first electrode lead 123 and the second electrode lead 124 may be detached from each other. Thus, the electrical connection may be physically interrupted so that the electricity does not flow ever. Here, the detachment may mean that adsorbed or attached portions are separated from each other. However, the bonding force between the first and second electrode leads 123 or 124 and the connection part 15 may be less than that between the first and second electrode leads 123 and 124 and the insulation part 14. Thus, when the repulsive force is applied to the first electrode lead 123 and the second electrode lead 124, the bonding force between the first and second electrode leads 123 and 124 and the insulation part 14 may be maintained to maintain the sealing of the battery case 13, but the first and second electrode leads 123 and 124 may be detached from each other.

When manufacturing the electrode lead 12, in order to allow the insulation part 14 to be easily bonded to the electrode lead 12 later, plating and surface treatment are performed on a metal plate to form a film on the outer surface. However, if the plating and the surface treatment are performed before bonding the first electrode lead 123 and the second electrode lead 124 to each other, since the films formed on the outer surface are bonded to each other after bonding the first electrode lead 123 and the second electrode lead 124 to each other, resistance may increase in the bonding surface. On the contrary, if the plating and the surface treatment are performed after bong the first electrode lead 123 to the second electrode lead 124, the connection part 15 connecting the first electrode lead 123 to the second electrode lead 124 may be damaged.

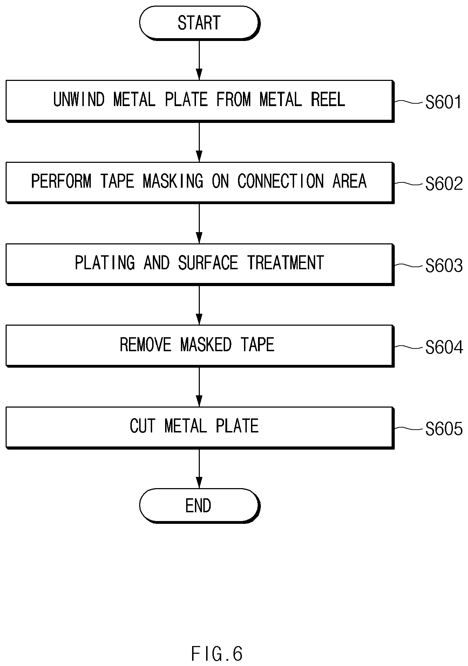

FIG. 6 is a flowchart illustrating a method for manufacturing a first electrode lead 123 and a second electrode lead 124 according to an embodiment of the present invention.

According to an embodiment of the present invention, even if plating and surface treatment are performed on the first electrode lead 123 and the second electrode lead 124, a film may not be formed on each of first and second connection areas 1231 and 1241, which are connected to each other through the connection part 15, to reduce resistance.

For this, the method for manufacturing an electrode lead 12 according to an embodiment of the present invention includes: a step of manufacturing each of a first electrode lead 123 and a second electrode lead 124; and a step of bonding the first electrode lead 123 to the second electrode lead 124 form a connection part. The step of manufacturing the first electrode lead 123 includes: a step of unwinding a first metal plate 211 from a first metal reel 21; a step of attaching a first tape 21 to perform masking on a first connection area 1231, on which the connection part is to be formed, in the first metal plate 211; a step of performing plating and surface treatment on the first metal plate 211; and a step of removing the first tape 31, and the step of manufacturing the second electrode lead 124 includes: a step of unwinding a second metal plate 221 from a second metal reel 22; a step of attaching a second tape 32 to perform masking on a second connection area 1241, on which the connection part is to be formed, in the second metal plate 221; a step of performing plating and surface treatment on the second metal plate 211; and a step of removing the second tape 32.

Also, a pouch type secondary battery 1 including the electrode lead 12, which is manufactured through the above method, according to an embodiment of the present invention includes: an electrode assembly 10 in which electrodes, which includes a positive electrode and a negative electrode, and a separator are stacked; a battery case having a pouch shape, which is configured to accommodate the electrode assembly 10; an electrode tab 11 connected to the electrodes to protrude from one side of the electrode assembly 10; a first electrode lead 123 having one end connected to the electrode tab 11; a second electrode lead 124 having one end connected to the other end of the first electrode lead 123 and the other end protruding to the outside of the battery case; and a connection part configured to bond the first electrode lead 123 and the second electrode lead 124 to each other. In the first electrode lead 123, a first film 1232 is formed on an outer surface thereof, and the first film 1232 is not formed on a first connection area 1231 on which the connection part is formed, and in the second electrode lead 124, a second film 1242 is formed on an outer surface thereof, and the second film 1242 is not formed on a second connection area 1241, on which the connection part is formed.

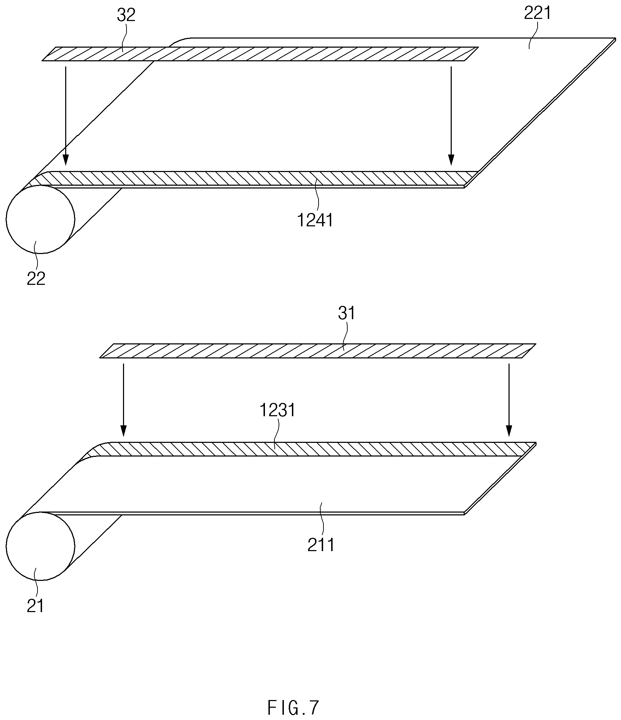

Hereinafter, each of the steps illustrated in the flowchart of FIG. 6 will be described with reference to FIGS. 7 to 10.

FIG. 7 is a schematic view illustrating a state in which tapes 31 and 32 are respectively attached to metal plates 211 and 221 wound from metal reels 21 and 22 according to an embodiment of the present invention.

In order to manufacture the two-stage electrode leads 12, first, the first electrode lead 123 and the second electrode lead 124 are separately manufactured. Also, the first electrode lead 123 and the second electrode lead 124 are bonded to each other to form the connection part.

In order to manufacture the first electrode lead 123, first, the first metal plate 211 is unwound from the first metal reel 21 (S601) . The first metal reel 21 is a reel on which the first metal plate 211 is wound, and the first metal plate is unwound from the first metal reel 21 at a constant speed. Also, the first metal plate 211 serves as a raw material for the first electrode lead 123.

When the first metal plate 211 is unwound, the first tape 31 is attached to the first connection area 1231 to perform the masking (S602). As described above, the first electrode lead 123 has one end connected to the electrode tab 11 and the other end connected to one end of the second electrode lead 124. Thus, the first connection area 1231 is formed on the other end of the first electrode lead 123 to be connected to the second electrode lead 124 later. Also, as illustrated in FIG. 7, in the first metal plate 211, it is preferable that the first connection area 1231 is formed to be stretched in a longitudinal direction along one edge of the first metal plate 211. As a result, one first tape 31 may be attached to the first connection area 1231 at a time without attaching the first tape 31 several times by cutting the first tape 31 into several pieces.

When the masking process of the first tape 31 is completed, the surface treatment such as plating, oxidation, and film treatment is performed on the first metal plate 211 (S603). If the electrode lead 12 serves as a positive electrode lead 121, as described above, the metal plates 211 and 221 may be made of the same aluminum (Al) material as a positive electrode collector. Also, if the electrode lead 12 serves as a negative electrode lead 122, the metal plates 211 and 221 may be made of the same copper (Cu) material as a negative electrode collector. The plating process is performed on the metal plates 211 and 221 with a metal such as nickel (Ni). The plating process is not limited to electroplating or electroless plating and may be performed in various manners.

When the plating process is completed, the surface treatment is performed to prevent oxidation of the metal plates 211 and 221 and to improve bonding force to the insulation part 14. The surface treatment may be chromate treatment using chromium. The chromate treatment is a kind of chemical film processing in which an insoluble chromate (chromates) film containing a chromium component is thinly formed on the surface of the metal. For this, the metal plates 211 and 221 are immersed in an aqueous solution containing chromium ions. As a result, the chromium ions undergo oxidation reaction, and the insoluble chromium oxide is generated on an outer surface of each of the metal plates 211 and 221 to form a chromate film. Here, the chromium ions may be various types of ions without limitation such as hexavalent or trivalent ions. Also, the various non-limiting materials such as chromic anhydride, chromium nitrate, chromium sulfate, chromium acetate, and chromium chloride may be used as the aqueous solution containing chromium ions.

The surface treatment may be non-chromate treatment using a material other than chromium. Here, the material other than chromium may be, for example, zirconium. If zirconia treatment using zirconium is performed, the metal plates 211 and 221 is immersed in an aqueous solution containing zirconium ions. As a result, the zirconium ions undergo oxidation reaction, and zirconium oxide is generated on one surface 1521 of the metal plates 211 and 221 to form a zirconia film. The non-chromate treatment is not limited thereto and may include titanium treatment using titanium. That is, the surface treatment of the metal plates 211 and 221 may not be limited, but be implemented in various manners.

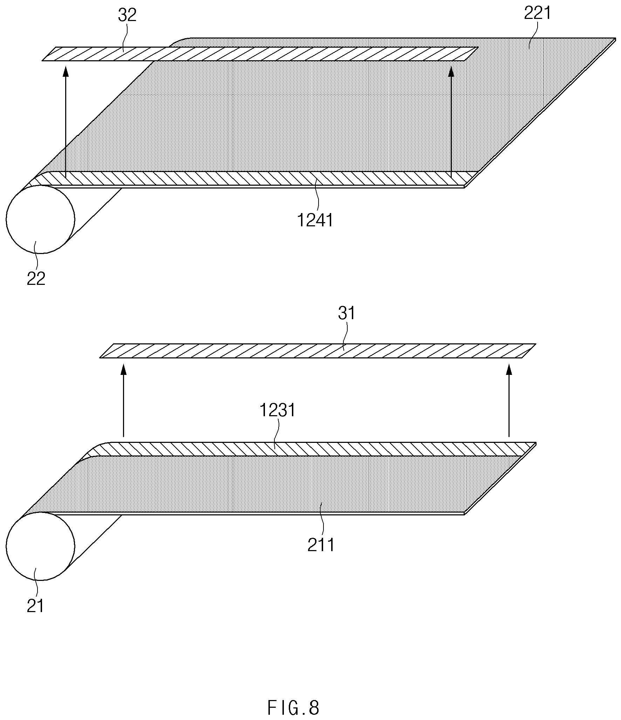

FIG. 8 is a schematic view illustrating a state in which the tapes 31 and 32 are respectively delaminated from the metal plates 211 and 221 wound from the metal reels 21 and 22 according to an embodiment of the present invention.

When the surface treatment of the first metal plate 211 is completed, as illustrated in FIG. 8, the masked first tape 31 is delaminated and removed (S604). As described above, when the surface treatment of the first metal plate 211 is completed, the first film 1232 is formed on the outer surface of the first metal plate 211, but the first film 1232 is not formed on the outer surface only in the first connection area 1231 that is masked using the first tape 31. Here, while the surface treatment is performed, the first tape 31 has not to be corroded or deformed. Thus, it is preferable that the first tape is made of a material that is excellent in corrosion resistance and abrasion resistance.

Thereafter, the first metal plate 211 is cut at regular intervals (S605). As a result, the first electrode lead 123 may be completely manufactured.

In order to manufacture the second electrode lead 124, the same procedure as the method of manufacturing the first electrode lead 123 is performed. Hereinafter, contents duplicated with the above-described contents will be omitted, but this is for convenience of description and is not intended to limit the scope of rights.

Particularly, first, the second metal plate 221 is unwound from the second metal reel 22 (S601). Also, when the second metal plate 221 is unwound, the second tape 32 is attached to the second connection area 1241 to perform the masking (S602). As described above, the second electrode lead 124 has one end connected to the outer end of the first electrode lead 123 and the other end protruding to the outside of the battery case. Accordingly, the second connection area 1241 is formed at one end of the second electrode lead 124 to be connected to the first electrode lead 123 later. Also, as illustrated in FIG. 7, in the second metal plate 221, it is preferable that the second connection area 1241 is formed to be stretched in a longitudinal direction along one edge of the second metal plate 221.

When the masking process of the second tape 32 is completed, the surface treatment such as plating, oxidation, and film treatment is performed on the second metal plate 221 (S603). When the surface treatment of the second metal plate 221 is completed, as illustrated in FIG. 8, the masked second tape 32 is delaminated and removed (S604) . As described above, when the surface treatment of the second metal plate 221 is completed, the second film 1242 is formed on the outer surface of the second metal plate 221, but the second film 1242 is not formed on the outer surface only in the second connection area 1241 that is masked using the second tape 32. Here, while the surface treatment is performed, the second tape 32 has not to be corroded or deformed. Thus, it is preferable that the first tape is made of a material that is excellent in corrosion resistance and abrasion resistance.

Thereafter, the second metal plate 221 is cut at regular intervals (S605). As a result, the second electrode lead 124 may be completely manufactured.

It is preferable that each of both the first electrode lead 123 and the second electrode lead 124 have a rectangular shape. Also, in order to be easily bonded to each other later, it is preferable that the first electrode lead 123 and the second electrode lead 124 have the same width. Thus, a predetermined interval at which the first metal plate 211 is cut and a predetermined interval at which the second metal plate 221 is cut may be the same.

When cutting the metal plates 211 and 221, a press device may be used, or laser may be used. That is, in order to manufacture the first electrode lead 123 and the second electrode lead 124, the metal plates 211 and 221 may be cut in various manners without limitation.

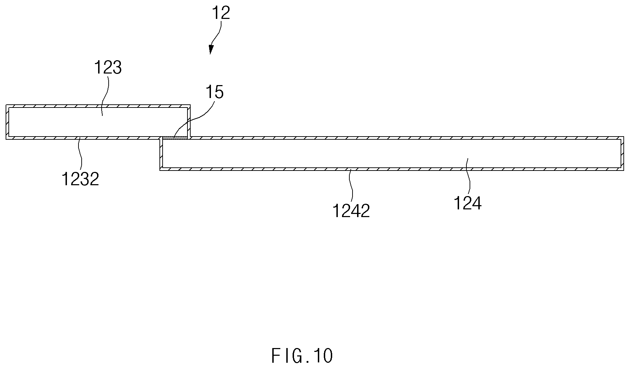

FIG. 9 is a schematic view illustrating a state in which the first electrode lead 123 and the second electrode lead 124 are bonded to each other according to an embodiment of the present invention, and FIG. 10 is a schematic view illustrating a state in which the first electrode lead 123 and the second electrode lead 124 are bonded to each other to completely manufacture two-stage electrode leads 12 according to an embodiment of the present invention.

As illustrated in FIG. 9, an adhesive 151 is applied to at least one of the first connection area 1231 of one end of the first electrode lead 123 or the second connection area 1241 of the other end of the second electrode lead 124. Also, the first connection area 1231 and the second connection area 1241 are bonded to each other to form a lead stack.

The adhesive 151 includes a material having conductivity. As a result, electricity generated from the electrode assembly 10 may be easily discharged to the outside. For this, the adhesive 151 is preferably formed by mixing a conductive material and a polymer.

The conductive material may include at least one of: natural or artificial graphite; carbon black such as carbon black, acetylene black, Ketjen black, channel black, furnace black, lamp black, and summer black; conductive fiber such as carbon fiber or metal fiber; metal powders such as carbon fluoride, aluminum, nickel, gold, silver, and copper powder; powder having a core/shell structure coated with a different kind of metal on one kind of metal; conductive whiskey such as zinc oxide and potassium titanate; conductive metal oxide such as titanium oxide; or conductive materials such as polyphenylene derivatives, in particular, may most preferably include silver. It is preferable that the conductive material contained in the adhesive 151 is contained at 70 wt% to 80 wt%.

The polymer may include at least one of an acrylic resin, an epoxy resin, an ethylene propylene diene monomer (EPDM) resin, a chlorinated polyethylene (CPE) resin, silicone, polyurethane, an urea resin, a melamine resin, a phenol resin, an unsaturated ester resin, polypropylene (PP), polyethylene (PE), polyimide, or polyamide, in particular, may most preferably include an epoxy or acrylic resin. It is preferable that the polymer contained in the adhesive 151 is contained at 20 wt% to 30 wt%.

After the adhesive 151 is applied, when heat is applied to the lead stack, the adhesive 151 is dried and cured to form the connection part 15, and thus, the connection part 15 includes a conductive material and a conductive polymer. Thus, as illustrated in FIG. 10, two-stage electrode leads 12 in which the first electrode lead 123 and the second electrode lead 124 are connected to each other may be completely manufactured.

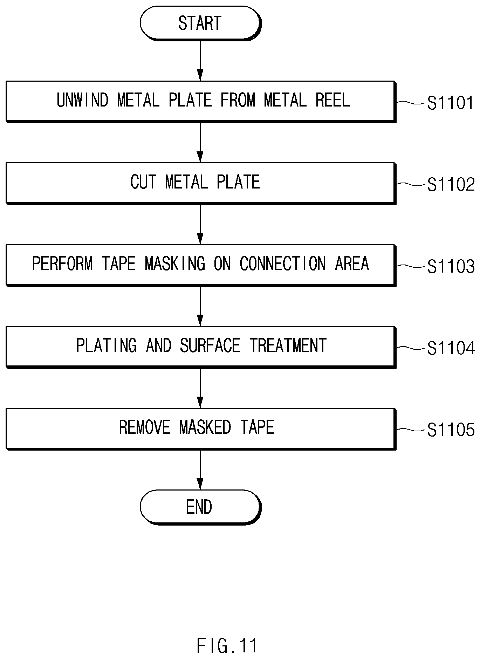

FIG. 11 is a flowchart illustrating a method for manufacturing a first electrode lead 123 and a second electrode lead 124 according to another embodiment of the present invention.

According to an embodiment of the present invention, in order to manufacture the first electrode lead 123 or the second electrode lead 124, the step of cutting the first metal plate 211 or the second metal plate 221 was performed after the first tape 31 and the second tape 32 are delaminated and removed. As a result, since the metal plates 211 and 221 are not cut into several pieces but are continuously formed as one, there is no need to cut the tapes 31 and 32 into several pieces and attach the tapes 31 and 32 several times, and thus, one tape 31 or 32 may be attached to the first and second connection areas 1231 and 1241 at once.

According to another embodiment of the present invention, in order to manufacture the first electrode lead 123 or the second electrode lead 124, a step of cutting a first metal plate 211 or a second metal plate 221 is performed before a first tape 31 or a second tape 32 is attached to be masked. That is, when the first metal plate 211 or the second metal plate 221 is unwound from a first metal reel 21 or a second metal reel 22, the first metal plate 211 or the second metal plate 221 is cut into several pieces. Particularly, first, the metal plates 211 and 221 are unwound from the metal reels 21 and 22, respectively (S1101). When the metal plates 211 and 221 are unwound, the metal plates 211 and 221 are cut at regular intervals (S1102). Thereafter, the first or second tapes 31 and 32 are attached to first or second connection areas 1231 and 1241 to perform masking (S1103). When the masking process of the tapes 31 and 32 is completed, surface treatments such as plating, oxidation, and film treatment are performed on the metal plates 211 and 221 (S1104). When the surface treatment of the metal plates 211 and 221 is completed, the masked tapes 31 and 32 are delaminated and removed (S1105). Thus, the first electrode lead 123 or the second electrode lead 124 may be completely manufactured.

When the above method is performed, since the first tape 31 or the second tape 32 is cut into several pieces, the first tape 31 or the second tape 32 is reduced in size. Therefore, the first or second tape 31 or 32 may be accurately attached to the first connection area 1231 or the second connection area 1241 at desired positions. In addition, since the masking process is performed even after the metal plates 211 and 221 are already cut, the process sequence may be flexibly changed.

Those with ordinary skill in the technical field of the present invention pertains will be understood that the present invention can be carried out in other specific forms without changing the technical idea or essential features. Therefore, the above-disclosed embodiments are to be considered illustrative and not restrictive. Accordingly, the scope of the present invention is defined by the appended claims rather than the foregoing description and the exemplary embodiments described therein. Various modifications made within the meaning of an equivalent of the claims of the invention and within the claims are to be regarded to be in the scope of the present invention.

## Claims

1. A method for manufacturing an electrode lead, the method comprising:
a step of manufacturing each of a first electrode lead and a second electrode lead; and
a step of bonding the first electrode lead to the second electrode lead form a connection part,
wherein the step of manufacturing the first electrode lead comprises:
a step of unwinding a first metal plate from a first metal reel;
a step of attaching a first tape to perform masking on a first connection area, on which the connection part is to be formed, in the first metal plate;
a step of performing plating and surface treatment on the first metal plate; and
a step of removing the first tape,
wherein the step of manufacturing the second electrode lead comprises:
a step of unwinding a second metal plate from a second metal reel;
a step of attaching a second tape to perform masking on a second connection area, on which the connection part is to be formed, in the second metal plate;
a step of performing plating and surface treatment on the second metal plate; and
a step of removing the second tape.

2. The method of claim 1, wherein the first electrode lead has one end connected to an electrode tab, and
the first connection area is formed on the other end of the first electrode lead.

3. The method of claim 2, wherein the second connection area is formed on one end of the second electrode lead.

4. The method of claim 1, wherein the step of manufacturing the first electrode lead further comprises a step of cutting the first metal plate at regular intervals after the step of removing the first tape, and
the step of manufacturing the second electrode lead further comprises a step of cutting the second metal plate at regular intervals after the step of removing the second tape.

5. The method of claim 1, wherein the step of manufacturing the first electrode lead further comprises a step of cutting the first metal plate at regular intervals before the step of attaching the first tape to perform the masking, and
the step of manufacturing the second electrode lead further comprises a step of cutting the second metal plate at regular intervals before the step of attaching the second tape to perform the masking.

6. The method of claim 1, wherein, when the step of performing the plating and the surface treatment is performed,
a first film is formed on an outer surface of the first metal plate, and
a second film is formed on an outer surface of the second metal plate.

7. The method of claim 1, wherein, in the step of performing the plating and the surface treatment is performed, the surface treatment comprises at least one of chromate treatment, zirconia treatment, or titanium treatment.

8. A pouch type secondary battery comprising:
an electrode assembly in which electrodes, which comprises a positive electrode and a negative electrode, and a separator are stacked;
a battery case having a pouch shape, which is configured to accommodate the electrode assembly;
an electrode tab connected to the electrodes to protrude from one side of the electrode assembly;
a first electrode lead having one end connected to the electrode tab;
a second electrode lead having one end connected to the other end of the first electrode lead and the other end protruding to the outside of the battery case; and
a connection part configured to bond the first electrode lead and the second electrode lead to each other,
wherein, in the first electrode lead, a first film is formed on an outer surface of the first electrode lead, and the first film is not formed on a first connection area on which the connection part is formed, and
in the second electrode lead, a second film is formed on an outer surface of the second electrode lead, and the second film is not formed on a second connection area, on which the connection part is formed.

9. The pouch type secondary battery of claim 8, wherein the first film or the second film comprises at least one of a chromate film, a zirconia film, or a titanium film.

10. The pouch type secondary battery of claim 8, further comprising an insulation part surrounding a portion of each of the first and second electrode leads to allow the first and second electrode leads to be bonded to the battery case.

11. The pouch type secondary battery of claim 10, wherein bonding force between each of the first and second electrode leads and the connection part is less than that between each of the first and second electrode leads and the insulation part.

12. The pouch type secondary battery of claim 10, wherein the insulation part surrounds a portion at which the first and second electrode leads are connected to each other through the connection part.

13. The pouch type secondary battery of claim 10, wherein the insulation part is made of at least one of thermoplastic, thermosetting and photocurable resins having electrical insulation properties.

14. The pouch type secondary battery of claim 8, wherein the connection part comprises a conductive material and a conductive polymer.

15. The pouch type secondary battery of claim 8, wherein the connection part has a thickness of 1 µm to 500 µm.
